Europäisches Patentamt

European Patent Office

Office européen des brevets

(19)

(11) Publication number: **0 072 681**

**B1**

(12) **EUROPEAN PATENT SPECIFICATION**

(45) Date of publication of patent specification: **30.07.86**

(51) Int. Cl.⁴: **F 16 K 7/12**

(21) Application number: **82304281.7**

(22) Date of filing: **13.08.82**

(54) **Diaphragm valve assembly for controlling fluid flow.**

(30) Priority: **13.08.81 US 292527**
**13.08.81 US 292595**

(43) Date of publication of application:
**23.02.83 Bulletin 83/08**

(45) Publication of the grant of the patent:
**30.07.86 Bulletin 86/31**

(84) Designated Contracting States:
**BE DE FR GB IT NL**

(56) References cited:
**AT-B- 247 088**
**FR-A-1 495 484**
**GB-A- 977 623**

(73) Proprietor: **American Standard Inc.**
**40 West 40th Street**
**New York, N.Y. 10018 (US)**

(72) Inventor: **Parkison, Richard G.**
**1908 Herr Lane**
**Louisville Kentucky 40222 (US)**
Inventor: **Hofstetter, Edward G.**
**4724 Southern Parkway**
**Louisville Kentucky 40214 (US)**

(74) Representative: **Bedggood, Guy Stuart et al**
**Haseltine Lake & Co. Hazlitt House 28**
**Southampton Buildings Chancery Lane**
**London WC2A 1AT (GB)**

Courier Press, Leamington Spa, England.

## Description

This invention pertains to a valve assembly of a diaphragm valve for controlling fluid flow, particularly although not exclusively a sanitary water valve, otherwise referred to as a faucet or tap.

Valve assemblies for controlling fluid flow through a valve chamber positioned between an inlet and outlet conduit and adapted for inherent correction of any misalignment between the valve member and the co-operating stationary valve seat disposed in the valve chamber, or to adjust for irregularities in the valve seat itself while avoiding erosion of the valve, are known. Some known valve assemblies provide, additionally, that when the valve member is closed and in abutment with the valve seat, it will not further rotate despite continued rotation of the valve stem, thereby to avoid abrasion and erosion.

Difficulties with known assemblies, however, include sealing effectiveness, multiplicity and complexity of parts, undue cost as a consequence, vulnerability to break-down, and the substitution of equivalent erosion about the nexus of the valve member and its stem for that eliminated between the valve member and valve seat.

It has been proposed (see AT—B—247088) to secure to the end of a metal valve stem a rubber seat by means of retainer rings and incorporating a steel insert on the interior of the rubber seat to effect a swivelling adjustment of the diaphragm to any misalignment. However, this cup-like swivel component requires frequent lubrication and is not secured to the valve stem so that rotation of the valve stem does not lift the diaphragm and swivel insert from the valve seat but simply relies upon fluid pressure to move the diaphragm and washer upwards when the valve stem is moved away from the valve seat. A friction ring is also provided, normally, about the valve stem to provide resistance to rotation of the stem and thus a smooth functioning of the assembly rather than a sudden violent response to an abrupt rotation of the faucet handle attached to the stem. This friction ring, an O-ring normally, forms a sliding seal, as well, between the valve stem and valve housing and is subject to significant erosion and destruction in rotation of the stem to effect a linear movement thereof in the valve housing.

To obviate or reduce certain of these difficulties, an articulated valve stem was developed that permitted omission of the steel swivel insert (see GB—A—977.623). The stem comprises a main stem, a ball joint and foot member to accommodate any valve seat irregularity, or the like. This assembly, while providing a more effective mechanism, secures these advantages at a significant increase in size, complexity, and cost due to material and engineering expenses. In addition, both this and the prior valve assembly include separate stem nut and lock nut components in the valve housing.

The present invention relates to a valve assembly for use with a valve housing having a valve seat surrounding a fluid flow passage, the assembly comprising a valve stem threadedly mounted in a collar for rotatable and axial movement therein, stop means on the stem for limiting its axial movement in the valve closing direction in co-operation with a stop ring disposed about a neck portion of the valve stem in spaced relation thereto, the end of the stem beyond the stop ring remote from the collar having an end flange axially located on a flat bearing surface of a swivel bearing plate so as to be freely rotatable relatively thereto, and a valve diaphragm constituted by a closure means on which the swivel bearing plate is located and which is moved axially upon movement of the stem towards a valve seat to close the fluid passage, the closure means having an annular flexible member interconnecting it with a sealing ring disposed about the stem, which sealing ring is adapted to be secured adjacent the stop ring and so as to isolate the valve stem from the fluid flow passage.

According to the present invention, the swivel bearing plate is in the form of a cup which contiguously surrounds the radially extended end flange of the stem with the peripheral rim of the bearing cup abutting that flange, and the flexible member of the diaphragm incorporates a constricted neck portion surrounding the stem neck portion such that the end closure means encloses the end flange and swivel bearing cup, which neck portion is axially contractible upon movement of the stem to carry the end flange and the enveloping closure means towards the stop ring (positively away from a valve seat), and axially expandable upon movement of the stem to carry the closure means away from the stop ring (towards a valve seat).

The assembly is used with a valve housing preferably defining a valve chamber positioned between inlet and outlet conduits, the valve assembly including the valve stem, swivel bearing and valve diaphragm mounted in co-operation with a valve seat within the valve housing. The valve stem is thus rotatably mounted in the housing to enable the stem to be moved axially towards and away from the valve seat.

The head of the stem will, in use, be adapted for retention in, and rotation by, a handle, and the stem is conveniently provided with a further flange as the stop means for limiting axial movement of the valve stem within the valve assembly.

Mounted about the end flange of the valve stem is the cup-shaped swivel component or washer preferably formed of a hard but resilient plastics, the latter of inherent lubricity in a significantly preferred embodiment. This swivel element is received in the enveloping terminal portion of the axially flexible and resilient valve diaphragm.

The diaphragm is preferably formed of a compressible elastomeric composition, its end closure or end cap portion enveloping the end flange of the stem and swivel component and being adapted to seat in fluid sealing engagement on the valve seat when the valve stem is moved to a closed position. The diaphragm is expanded at its opposite end to provide the sealing ring secured, in use, to the valve housing.

Connecting, and integral with, the foregoing end closure and sealing ring portions of the diaphragm is the flexible member with the constricted neck portion which fits loosely about the annular neck of the valve stem, conveniently sloping outwardly at its opposite ends to form the end cap and sealing ring. The diaphragm neck is axially resilient, flexible and compressible and the inner diameter of the diaphragm sealing ring is such that when the valve stem bearing the swivel component and diaphragm closure about its foot are moved to a valve open position the annular diaphragm neck collapses and is drawn up into the sealing ring and the end cap is positively lifted from the valve seat, without breaking the mechanical seal effected by the sealing ring with the surrounding valve housing and the stop ring of rigid construction, normally a metal or engineering plastics, positioned about the valve stem and retained in a fixed position within the valve assembly.

The stop ring has an inner diameter less than that of the further flange formed about the inner length of the valve stem to limit the axial movement of the valve stem and to prevent it from exerting undue compressive force on the diaphragm and its end cap into, and when in, contact with the valve seat; that is, a squeeze effect not in excess of about 45 percent of the thickness of the end closure means when it is compressed.

The valve diaphragm and swivel bearing adapt to, and compensate for the presence of any irregularity in the surface of the seat or valve and provide for independent rotation of the valve stem with concomitant stationary disposition of the valve in the valve seat when the two are in contact in the closed position of the valve assembly.

The foregoing assembly provides for simplicity and relative miniaturization in construction with consequent conservation of materials and significant ecocomic advantages; a reduction in the number of parts required, with elimination of a multiplicity of sites for erosion and leakage and the need for careful calibration in manufacture of the components to reduce the likelihood of leakage which tends to occur where a plurality of elements are required to mate with one another.

The diameter of the valve stem neck, which is conveniently cylindrical in conformation, is preferably within a range of from about 65 percent to 85 percent of the interior diameter of the constricted neck of the diaphragm in its uncompressed unextended state, in a preferred embodiment of the invention.

Furthermore, the radial space defined by the upper portion of the necked stem and the inside diameter of the stop ring should be no greater than 160 percent of the wall thickness of the diaphragm neck and particularly the intermediate portion of the neck wall that is involuted or convoluted when the diaphragm is in a contracted state.

The invention may be put into practice in a number of ways but certain specific embodiments will now be described, by way of example only, with reference to the accompanying drawings, in which:—

Figure 1 is a longitudinal sectional view of a valve stem and valve diaphragm and sealing unit mounted in a faucet assembly including a valve chamber and fluid inlet and outlet conduits;

Figure 2 is an enlarged longitudinal sectional view of the valve assembly shown in Figure 1;

Figure 3 is a partially exploded elevational view of the valve assembly of the present invention shown in Figure 1 and 2; and

Figure 4 is a fragmentary sectional view of a modified embodiment of the diaphragm and valve stem of Figure 1, 2 and 3 mounted in the faucet assembly of Figure 1.

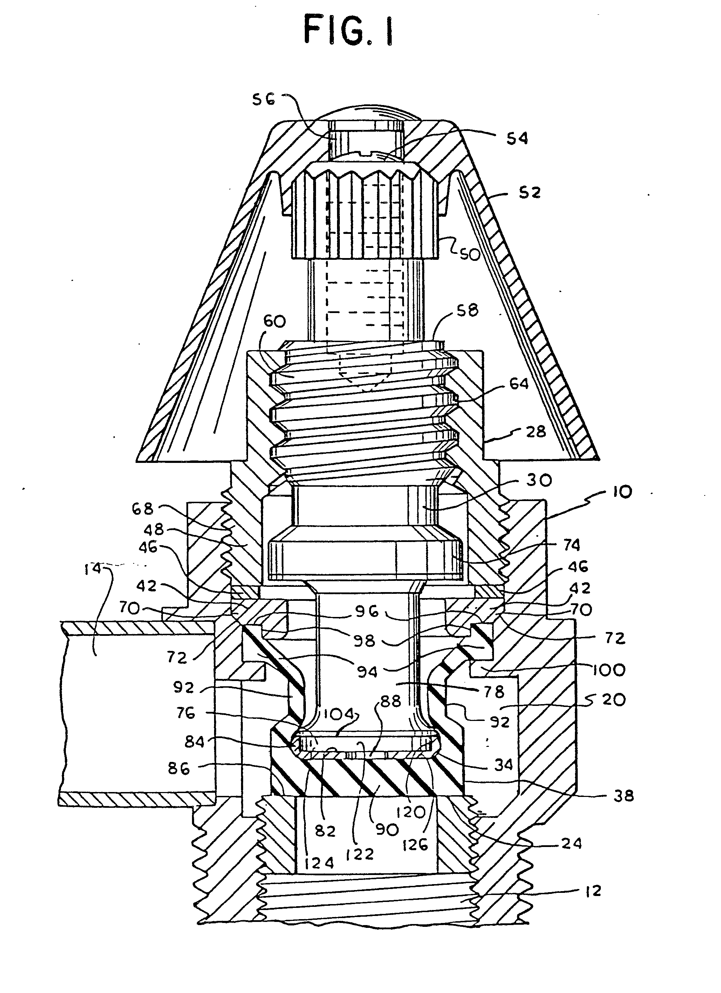

Referring to Figure 1, a valve housing 10 is provided with an inlet conduit 12 and an outlet conduit 14, connected through a valve chamber 20, an annular valve seat 24 threadedly mounted in the valve housing 10 and adapted to operate in co-operation with the valve assembly 28 to control the flow of a fluid, notably a liquid, and particularly water, through the valve chamber 20 from the inlet 12 to and through the outlet 14.

The dry stem valve assembly 28 is composed of a valve stem 30, and a swivel bearing or washer 34, a valve diaphragm 38, a metallic stop ring 42, metallic friction washer 46 and a unitary stem nut or collar 48. The term "dry stem valve assembly" as employed herein is intended to refer to the isolation of the stem valve from the fluid passing through the valve chamber. The valve stem is, however, lubricated as described elsewhere herein. Indeed, the isolation of the stem from the fluid of the valve chamber in accordance with the invention permits retention for an indefinite term of the lubricant fluid in the stem valve assembly. The head 50 of the valve stem 30 is splined, or otherwise modified in a manner known to those skilled in the art for attachment to a faucet handle 52 to provide for rotation of the valve stem 30 in the manner prescribed herein. The faucet handle 52 is otherwise secured to the stem head 50 by a screw 54 received in the threaded interior of the recess 56 axially disposed in the stem head 50 and terminating in the intermediate body 58 of the valve stem 30. The annular exterior 60 of the body 58 occurring in spaced relation to the head 50 is threaded.

The intermediate exterior surface 60 of the valve stem 30 is adapted to threadedly and reciprocably engage the interior upper portion 64 of the stem nut or collar 48. The stem nut 48 is also threaded about its exterior lower surface 68 for engagement with the valve housing 10. The stem nut or collar 48 is seated on the friction ring or washer 46 which is, in turn, contiguous with the stop ring 42. The stop ring has a sloped outer margin 70, knurled or otherwise serrated, for frictional engagement and seating in the shoulder 72 of the valve housing 10 as shown in Figure 1.

The threaded portion 60 of the valve stem 30 also occurs in spaced relation to the radially disposed annular flange 74 along the intermediate axis of the stem body. This first or intermediate flange 74 is connected to an annular expanded foot or second terminal flange 76 by a constricted neck 78, of cylindrical conformation, and substantially uniform diameter, in a particularly preferred embodiment.

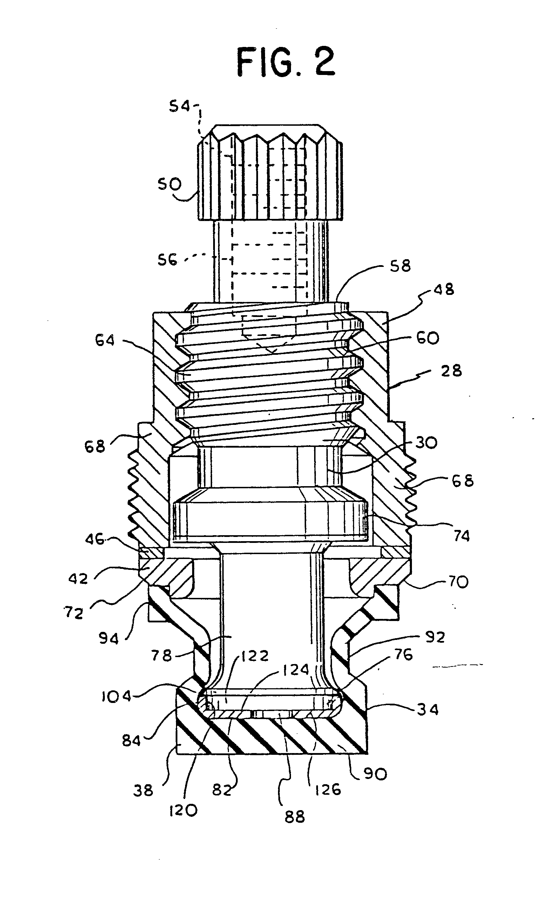

Mounted in contiguous engagement about the terminal flange or foot 76 is a cup-shaped disc or bearing, the swivel 34, comprising, in the preferred embodiment of the invention shown in Figure 1 to 3 of the drawings, a bearing surface 82, in contiguous relationship with the flattened radially extended surface of the foot 76 and terminating peripherally in the circumferentially disposed upwardly turned rim or lip 84. The lip or rim 84 provides the swivel with the capacity to be retained concentrically on the valve stem 30 and irregularities in the engaging rim 86 of the valve seat 24 are absorbed in the valve seating component 90 of the diaphragm 38.

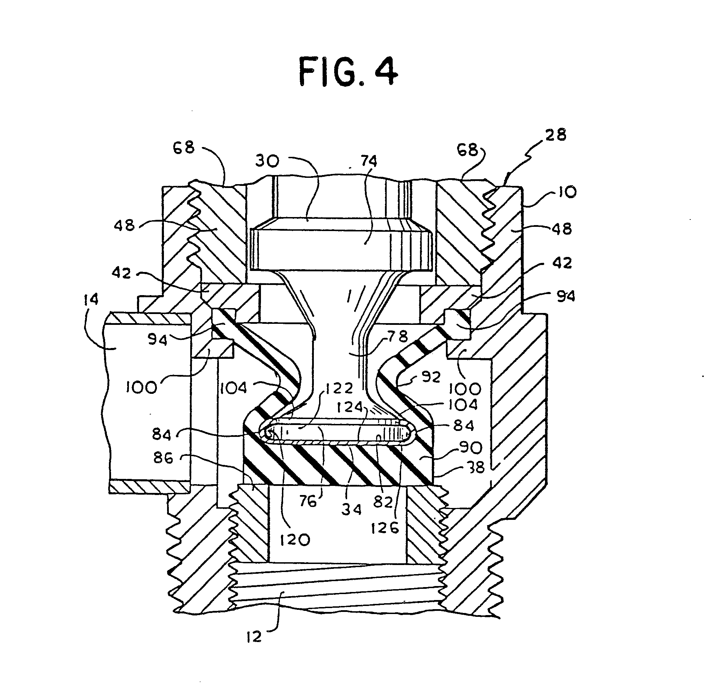

In the alternative, less preferred embodiment of Figure 4, the swivel rim 84, in addition to extending upwardly at a right angle to the swivel bearing surface 82, as in the preferred embodiment of Figure 1 to 3, wraps around the curved periphery of the foot 76 in snap-on engagement therewith. This embodiment thus requires that the rim 84 be resilient in order to snap over the terminal flange 76 so that the swivel or cup 34 is caused to move axially with the stem and yet the swivel 34 is free to rotate on the stem or the stem within the swivel without binding between the stem and swivel.

Optionally, but preferred, as shown in the drawings, is a swivel 34 in the bearing surface 82 of which is defined a radially disposed orifice 88 or recess (not shown). The recess is of equivalent annular conformation and diameter and provides a spaced interval between the bearing surface and the terminal flange 76. The orifice or recess serves as a lubricant reservoir. In the former case, however, the diaphragm 38 must be retained in contiguous relation to the bearing surface 82 of the swivel 34 for the orifice to be functional for this purpose. In any event, the presence of the orifice 88 or a recess serves to reduce the minimal friction existing between the inner bearing surface 82 and lip or rim 84 of the swivel 34 and the stem foot 76 which are, as described elsewhere herein, in abutting relation. The lip or rim 84 is adapted to abut a step 104 forming a groove disposed about the periphery of the foot or terminal flange 76, in a particularly preferred embodiment.

The step 104 and top margin of the rim 84 of the swivel integrate to form a smooth, essentially continuous mating of external surfaces, to avoid abrasion of the interior of the diaphragm at the point of its contraction from the end cap 90 into the neck portion 92 thereof. This is particularly significant in the valve stem configuration of Figure 1 to 3 where the step 104 represents the outer peripheral limit of the stem foot 76; whereas in the embodiment of Figure 4 the step 104 is recessed to accommodate the wrap-around rim 84 of the swivel 34.

In the preferred embodiment, the step 104 is thus constructed as an overhanging component of the stem foot which meets the ascending rim or lip 84 of the swivel 34 as shown in Figure 1 to 3. The foregoing lip 84 is disposed in contiguous relation to the straight or substantially straight, vertical side wall 120 of the terminal tip 122 of the foot 76; and the ascending rim 84 of the swivel is, like the adjacent side wall 120 of the stem foot 76, at, or substantially at, right angles to the terminal stem foot surface 124 and swivel bearing surface 126 and inner bearing surface 82 of the swivel 34. The swivel of the preferred embodiment is caused to adhere to the stem foot 76 by the enveloping diaphragm 38. This bias is enhanced normally by the pressure exerted on the diaphragm by the pressure of the transmitted fluid through the valve chamber when the assembly is in the valve open position. In the closed position, pressure is also exerted on the diaphragm, and consequently the swivel, by contact of the diaphragm with the valve seat. The side wall 120 of the terminal extremity or tip 122 of the stem foot 76 is curved as shown in Figure 4 to receive the wrap-around snap-on rim 84 which, in this embodiment, constitutes a gripping means.

The provision of an orifice 88 in the swivel 34 is further preferred in that this orifice 88 provides clearance for a cut-off teat that is often present on the outer center portion of the stem foot as a result of processing of the valve stem 30 on a screw machine. Where the orifice is not included, and the cut-off teat occurs, the latter must be removed from the axis or center of the foot exterior by a separate operation.

The valve stem 30 is normally metallic and formed of brass, or less desirably, of aluminium or steel. The swivel 34 is formed of a plastics, and more particularly, a thermoplastic resin formulation, and most desirable, one incorporating an acetal copolymer (including additonally, or in the alternative, a terpolymer), although a thermoplastic polyamide (nylon) may also be employed. The polyacetal resin formulation employed herein has an inherent lubricity providing a dynamic coefficient of friction where the plastics is in contact with steel, brass or aluminium within the range of about 0.10 to about 0.35 and preferably about 0.15 as determined by ASTM Test Method D—1894. The preferred acetal copolymer resins for use herein, including terpolymers, also show a Rockwell Hardness M-scale of about 30 to 85 as measured by ASTM D 785; a flexural strength at 5 percent deformation, using ASTM D 790, of about 10,000 psi (689.5 bar) to 15,000 psi (1,034.2 bar), and preferably about 13,000 psi (896.3 bar); an elongation at −40°F (−40°C) of 15 percent to 30 percent, and preferably about 20 percent; and, at an ambient temperature of 73°F (26°C), of 45 percent to 75 percent and most desirably about 60 percent, employing ASTM D 638 Speed B. The preferred acetal resins for use herein are those having a melt index of from about 7 to about 27.

Polyacetal resins for use in the practice of the present invention are sold under the trademark CELCON Celanese Corporation, and most desirably CELCON M 90-04, and under the trademark DELRIN by the duPont Company of Wilmington Delaware. The coefficient of friction of the plastics employed can be even further and significantly reduced by use of an appropriate lubricant such as a conventional silicone concentrate or other standard lubricant oil well known to those skilled in the art, and may be retained in the reservoir 88.

The swivel 34, as thus described, permits free rotation of the valve stem 30 with respect to the swivel unit 34. This latter unit 34 will remain stationary with respect to any rotary movement of the valve stem 30 and foot 76 when the diaphragm 38, secured to the swivel unit 34, and in turn to the valve housing, as described in detail below, is seated on the valve seat 24. The diaphragm 38, in co-operation with the swivel 34, will remain stationary as well, eliminating the significant erosion that would otherwise occur between the diaphragm 38 and valve seat 24 with continued rotation of the valve stem 30 when it is moved in conventional manner to close the valve and eliminate fluid flow through the valve chamber 20. Other aspects and advantages of the relationship, construction and composition of the swivel component 34 and valve diaphragm 38 will be evident from the discussion occurring hereinafter.

Disposed about the exterior of the swivel 34, therefore, is the valve diaphragm 38 formed of a resilient, compressible elastomer, such as synthetic or natural rubber, polychloroprene, styrene-butadiene copolymer (GRS, Buna N), polybutadiene, or the like. The diaphragm 38 comprises a flattened terminal or seating component or end cap 90 for engaging the rim 86 of the valve seat 24 when the valve assembly is in a closed position. The interior surface of the diaphragm end cap or valve 90 abuts the entire, or substantially all of, the outer surface of the swivel 34 and provides a closed end to the bearing orifice 88, where present, and continues in an abutting engagement about the bearing rim 84; so that the terminal end cap seating means 90 is retained in and about the swivel rim 84 as the stem 30 and the integral lower flange or foot 76 contained in the swivel 34 is moved towards or away from the valve seat 24.

The diaphragm contracts radially from its end cap seating means 90 into a resilient, axially expandable and contractible radially recessed neck 92 that is disposed about and in spaced relation to the corresponding neck 78 of the valve stem 30.

The valve stem neck 78 and the neck 92 of the diaphragm 38 are disposed in spaced parallel alignment along the intermediate portion of the diaphragm neck 92. The valve stem neck 78 has a diameter within the range of about, or precisely, 65 percent to 85 percent, whether in the embodiment Figure 1 to 3 or that of Figure 4 of the drawing, and preferably, about or precisely, 75 percent, of that of the inside diameter of the diaphragm neck 92 along this intermediate, most radially contracted portion of the diaphragm 38, as determined when the diaphragm is in an unstressed, unextended and uncompressed state.

Further, the radial space defined by the upper portion of the neck 78 of the valve stem 30 and the inside diameter of the stop ring 42 is, in contact with the foregoing diameter relationship, up to, and not in excess of about 160 percent of the wall thickness of the diaphragm neck 92, and particularly the intermediate portion of the diaphragm neck wall that is involuted or convoluted when the diaphragm 90 is in a contracted state.

This relationship of the stem, diaphragm neck and stop ring prevents the undue involution or collapse of the wall of the diaphragm neck 92 when the diaphragm end cap 90 is withdrawn from the valve seat 24. This limitation on the flexure of the diaphragm neck has been found to prevent fracture thereof over an extended period of time when the neck is flexed in response to the pressure occurring in the valve chamber when fluid is passing therethrough. The foregoing diameter relationship also permits sufficient flexing of the diaphragm neck to permit a collapsing thereof most efficient to removal of the diaphragm end cap 90 from the valve seat 24 when desired.

The range in size of the internal diameter of the diaphragm extends from about 0.275 inch (7 mm) to about 0.375 inch (9.5 mm); and is more desirably from 0.312 inch (7.9 mm) to 0.337 inch (8.6 mm); preferably from 0.300 inch (7.6 mm) to 0.350 inch (8.9 mm); and, in a particularly preferred embodiment is about 0.325 inch (8.3 mm).

These parameters have application, by way of illustration, to standard water faucet assemblies and the like; and are particularly useful, for example, in those assemblies which are capable of transmitting approximately 2.5 gallons per minute to 4 gallons per minute (11.4 lit/min to 18.2 lit/min).

The alternative and less preferred embodiment of the diaphragm 90 is shown in Figure 4 wherein the neck 92 of the diaphragm 38, while maintaining a spaced relation to the neck 78 of the valve stem 30, is sloped inwardly toward the axis of the stem at a point intermediate between the sealing ring 94 and the end cap, end closure means of valve 90. The diaphragm 38 may, alternately and preferably, assume an intermediate parallel alignment similar to that shown in Figure 1 to 3, as well, and insofar as its radial extension provides a diameter and spatial relationships with respect to the valve stem neck 78 and stop ring 42, such as described hereinabove, and one that is sustained along the length of the diaphragm neck and that of the stem valve, a desirable valve assembly is attained. The V-shape in vertical section of the diaphragm neck as seen in Figure 4, rather than the substantially uniform diameter of the stem neck 78 together with a corresponding uniformity in the axial inner diameter of the intermediate portion of the diaphragm neck, is, however, less preferred.

As will be evident, however, from the embodiment of Figure 4, in which the cross-sectional diameter of the stem neck is uniform briefly intermedate between its opposite ends but expands axially in a sloped gradual manner to form the flanges 74 and 76, the stem neck may assume a variety of cross-sectional forms, so long as the diameter relationships critical to a significantly superior valve assembly are maintained. In this context, the employment of polygonal configurations in construction of the stem neck is, for example, avoided so that any tendency toward abrasion of the interior wall of the elastomeric diaphragm neck will be avoided.

The embodiment of Figure 1 to 3 illustrates the foregoing preferred embodiment in which the neck 92 of the diaphragm 38, intermediate between its radial expansion at either end and the neck 78 of the valve stem 30 assume a cylindrical construction of uniform or substantially uniform diameter.

The diaphragm neck 92 expands thereafter, in any event, as noted, in its upward extension in a sloped or conical manner terminating in the radially extended diaphragm sealing ring or rim. The inner margin of the diaphragm sealing rim 94, at its nexus with the outwardly sloping neck 92 has, in a preferred embodiment, a diameter larger than the outer diameter of the terminal seating component or diaphragm end cap 90. The sealing ring 94 and end cap 90 are thicker and, as a consequence, more rigid than the diaphragm neck 92. The flexibility of the latter is essential to the bellows-like action to which it is subjected in opening and closure of the diaphram valve 90 with simultaneous retention in place of the sealing ring 94.

To elaborate on the relationship and function of the diaphragm, in the rotary movement of the valve stem 30 in the stem nut 48 away from the valve seat 24, to an open position, the end cap portion 90 of the diaphragm 38 does not rotate but moves in a linear or axial direction with the plastics swivel 34 about which it is retained. The stem foot 76 rotates with the remainder of the valve stem 30 of which it is an integral part. Protection against rotation, erosion and distortion of the diaphragm 38 is afforded by the swivel 34 which does not rotate. The axially constricted and sloped tubular diaphragm neck 92 is drawn up into the passage defined by the lower and inner margin of the stop ring 42, upon which the diaphragm sealing ring or rim 94 is mounted, and the necked portion 78 of the valve stem, when the valve stem 30 is moved away from the valve seat 24 to an open position.

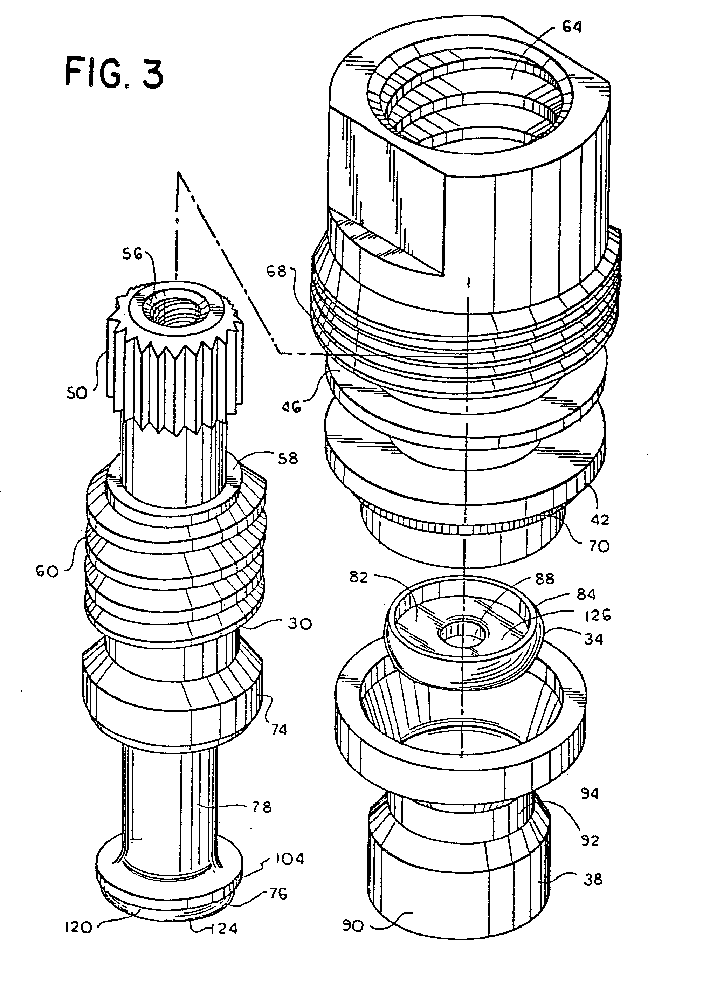

The diaphragm sealing ring 94 engages and seats upon the metallic stop ring 42 within the sloped knurled border 70 thereof as shown in Figure 3 and upon the radially flat surface 96 thereof as seen particularly in Figure 1 and within the downwardly disposed annular inner shoulder or flange 98 adapted to engage the inner margin of the diaphragm sealing ring 94 and prevent its deformation inwardly with consequent breaking of the seal it provides. A metallic friction washer 46 is positioned between the lower terminus of the stem nut 48 and the upper surface of the stop ring 42.

The outer periphery of the elastomeric sealing ring 94 abuts against the inner wall of the valve housing 10 and is supported in that position by the inwardly directed shoulder 100 of the valve housing 10. The sealing ring 94 thus nests in the groove provided by the stop ring 42 atop the sealing ring 94 and, as noted, on its own interior margin by means of the stop ring's downwardly disposed flange 98 as well. As a result, with tightening of the stem nut 48 in the valve housing 10, the resilient, compressible, sealing ring 94 secures the nexus of the stop ring 42 and valve housing 10 against leakage of fluid passing through the valve chamber 20. At the same time, the sealing ring 94 prevents rotation of the diaphragm 38 in the valve assembly 28.

The friction washer 46 permits tightening of the stem nut or collar 48 into the assembly with movement thereof relative to the smooth upper surface of the stop ring 42 without causing the latter to move and abrade the surface of the sealing ring 94 of the diaphragm 38.

As will be evident, all of the components of the valve assembly, with the exception of the elastomeric diaphragm 38 and the swivel 34, are made of hard, rigid material such as, for example and normally, a metal such as brass, aluminium, steel, nickel, copper or other alloys, engineering plastics or the like known to those skilled in the art.

The diaphragm sealing ring or rim 94 of the diaphragm 38 in engagement with the stop ring 42 and valve housing 10 thus provides, as noted, the valve assembly 28 with a fluid seal which, in that the diaphragm 38 is retained in a stationary position by virtue of the swivel bearing element 34, is protected against the erosion that would be experienced by a conventional O-ring seal, for example, present about the valve stem. The O-ring, as conventionally disposed, is subject to wear in its slideable engagement with the inner surface of the valve housing in linear and rotational movement of the valve stem through the housing between open and closed positions.

The first or intermediate flange 74 of the valve stem 30 serves to define the maximum distance the end cap or valve portion 90 of the diaphragm 38 may be moved, to or away from the rim 86 of the valve seat 24.

To effect this purpose the outer diameter (or at least a portion thereof) of the intermediate flange 74 is made to exceed that of the inner diameter of the threaded upper inner wall 64 of the stem nut or collar 48, so that the lower end of the threaded surface 64 acts as a stop against removal of the valve stem 30 from the valve housing 10 and, specifically, the stem nut 48. This relationship and construction is particularly significant in that when the valve stem 30 is withdrawn, with concomitant linear movement of the diaphragm end cap 90 and involuted contraction of the tubular diaphragm neck 92 into the passage defined by the diaphragm sealing rim or ring 94, the rotational outward movement of the stem will not exceed that which would distort and disrupt the sealing rim 94 of the diaphragm, unduly distend the diaphragm neck 92, or upset the assembly of diaphragm 38, friction washer 46, and stop ring 42 as aforesaid.

The radial extent or diameter of the first or intermediate flange 74 also exceeds that of the inner margin of the stop ring 42 so that the valve stem 30 cannot extend in its axial movement beyond a prescribed limit providing for firm, secure engagement of the end cap 90 with the rigid, hard valve seat 24 but without undue stress or compression being exercised on the end cap 90, the valve seat 24, or the other relevant components such as, illustratively, the swivel 34, stem foot 76 or the diaphragm neck 92 thereof.

The downward movement of the stem is thus limited to that which provides a squeeze or compression of within the range, approximately and preferably precisely, of from 25 percent to 45 percent, and most desirably about 35 percent, of the diaphragm end cap 90 between the valve seat 24 and the swivel 34.

As will be evident, the physical properties of the elastomer forming the diaphragm 38 are also of material relevance in securing significant advantages.

The elastomer for use in accordance with the embodiments of the invention has, accordingly, a durometer hardness of from about 65 to 75, and preferably about 70, as measured by a durometer gauge according to ASTM D 2240—68 and read on a Type A scale; and a minimum tensile strength, as determined by ASTM D 412, of 700 psi min. (48.26 bar min.) to 2000 psi min. (137.9 bar min.). More desirably, minimum tensile strength will not be less than 1000 psi (68.95 bar), and more desirably 1500 psi (103.42 bar). The elastomer has, in addition, a maximum compression set resistance according to ASTM D 395 Method B of up to and not in excess of about 15 percent.

The resilience, compression and frictional properties of the diaphragm are significant as well in that they are necessary to realization of significant advantages of the invention.

It is essential, by way of illustration, that the frictional engagement between the inner surface of the diaphragm end cap or valve 90 and the outer surface of the swivel 34 be sufficient to retain the swivel in a static or stationary position, that is, in a non-rotational state (without reference to its linear or axial movement) when the valve stem 30 bearing the swivel 34 and diaphragm end cap 90 is rotated to move it towards or away from the valve seat 24. The plastics swivel 34 exerts minimal friction, a property necessary to its satisfactory engagement with the valve stem 30, so that the latter can rotate independently and free of erosion induced by the failure to rotate, of the swivel 34. A positive resistance to rotation of the diaphragm end cap 90 and indeed the entire diaphragm 38, and communicated by it to the plastics washer or swivel 34, is that effected by the second primary function of the diaphragm sealing ring 94 in that its positive engagement with the metallic stop ring 42, valve housing 10, and valve housing shoulder 100 prohibits such rotary movement.

The compressible, resilient character of the end cap 90 is, of course, also essential to an effective fluid seal.

It will be evident, therefore, that in contrast to conventional compression valve assemblies wherein the rubber washer is abraded by its frictional rotary shearing motion in being removed from or brought into contact with the valve seat, the end cap 90 of the invention is moved only in an axial path, the valve stem 30 alone assuming a rotary, as well as an axial, movement within the valve housing 10.

Further, the presence of the first or intermediate flange 74 made of metal, preferably, or an engineering plastics or the like, along the intermediate axis of the stem body 30, in combination with the interior shoulder provided by the stem nut 48 at the upper end and the stop ring 42 both made of metal or material of similar wear-resistant properties, limits the axial movement of the valve stem 30 and, as a consequence, precludes excessive compressive stress from being exerted by the user of the faucet on the elastomeric diaphragm 38, and particularly on its end cap 90, in closing of the valve, preventing undue distortion, stress, dislocation, and rupture of the diaphragm 38, and particularly its neck portion 92, when the valve is open. Indeed, since a user cannot know when he is inducing excessive torque, stresses of this kind are believed to occur frequently in the use of conventional compression valve assemblies.

The provision of this limiting, in effect, "metal to metal" axial reciprocal movement of the stem 30, free of rotation of the diaphragm 38, not only eliminates abrasion and distortion otherwise likely to occur, but since the diaphragm will continue to seat properly and effectively in the closed position over an extended period of time without faucet dripping or the like, attempts to use excessive force by a user of the faucet incorporating the valve assembly of the invention are less likely to occur.

The diaphragm 90, by virtue of its sealing ring 94 engaged between the stop ring 42 and valve housing 10, as described, and the enclosure of the valve stem neck 78 and stem foot 76 by the diaphragm 90 also serves to isolate the valve stem 30 and swivel 34 from contact with the fluid passing through the valve chamber (20) passageway.

As a result of this sealed construction, the grease, or other lubricant or the like applied to the valve assembly at the time of manufacture, or thereafter introduced into the radially disposed lubricant reservoir 88 or recess, will be retained in the assembly to inhibit erosion and maintenance of a smoothly operating valve assembly.

In known compression valves, on the other hand, the threads of the valve stem have conventionally been submerged in the water passageway or valve chamber and the lubricant is readily removed by the passing fluid; an undesirable effect where, for example, the valve assembly is used to control the supply of drinking water. The use of the conventional packing gland or O-ring to seal the exposed stem and prevent leakage about the faucet handle is obviated. The packing gland is normally insufficiently resilient and leaks with age and use, in any event, and the elastomeric O-ring while resilient is, nevertheless, also adapted to rotate with the stem with consequent abrasion and leakage. The sealing ring 94 of the diaphragm 38 replaces the foregoing packing gland and O-ring providing a static seal immune from the stresses of rotary movement of the stem. The diaphragm thus enjoys a multiple of functions, including those of a stem sealant, lubricant retention means and valve closure member.

A valve structure that meets the most arduous testing standards employed for assessing the reliability of faucets, and particularly those water faucets used in kitchens, bathrooms and the like, including cycle life tests in a hot water environment and portable washer tests, is provided in which the diameter of the stem neck is within the range of about, or precisely, 65 percent to 85 percent of the interior diameter of the intermediate portion of the diaphragm neck; and in which, further, the radial space defined by the upper portion of the necked stem and the inside diameter of the stop ring should be no greater than 160 percent of the wall thickness of the diaphragm neck and particularly the intermediate portion of the neck wall that is involuted or convoluted when the diaphragm is in a contacted state.

A further provision of material significance in this context is the incorporation in the valve assembly of the overhanging step 104 mating with the vertically disposed rim 84 of the swivel 34.

A swivel assembly is provided that reduces the complexity and multiplicity of parts; provides for independent rotation of the valve stem when the valve is in sealing engagement with the valve seat to eliminate erosion at the interface of the valve washer and valve seat (without substituting an eroding interaction between the valve and co-operating valve stem); provides for control and removal of the washer from the valve seat by direct operation of the valve stem away from the valve seat and without dependence on the often unpredictable impact and rate of fluid flow from an inlet conduit; and incorporates a sealing ring between the valve housing and stem that avoids the destructive forces of slideable engagement of the sealing ring therebetween.

**Claims**

1. A valve assembly (28) for use with a valve housing (10) having a valve seat (24) surrounding a fluid flow passage (12, 14), the assembly comprising a valve stem (30) threadedly mounted in a collar (48) for rotatable and axial movement therein, stop means (74) on the stem for limiting its axial movement in the valve closing direction in co-operation with a stop ring (42) disposed about a neck portion (78) of the valve stem in spaced relation thereto, the end of the stem (30) beyond the stop ring (42) remote from the collar (48) having an end flange (76) axially located on a flat bearing surface of a swivel bearing plate (34) so as to be freely rotatable relatively thereto, and a valve diaphragm (38) constituted by a closure means (90) on which the swivel bearing plate is located and which is moved axially upon movement of the stem (30) towards a valve seat (24) to close the fluid passage, the closure means (90) having an annular flexible member interconnecting it with a sealing ring (94) disposed about the stem (30), which sealing ring (94) is adapted to be secured adjacent the stop ring (42) and so as to isolate the valve stem (30) from the fluid flow passage, characterised in that the swivel bearing plate is in the form of a cup (34) which contiguously surrounds the radially extended end flange (76) of the stem (30) with the peripheral rim (84) of the bearing cup abutting that flange, and in that the flexible member of the diaphragm incorporates a constricted neck portion (92) surrounding the stem neck portion such that the end closure means encloses the end flange (76) and swivel bearing cup (34), which neck portion (92) is axially contractible upon movement of the stem (30) to carry the end flange (76) and enveloping closure means (90) towards the stop ring (42) (positively away from a valve seat), and axially expandable upon movement of the stem to carry the closure means away from the stop ring (towards a valve seat).

2. A valve assembly as claimed in claim 1, in which the peripheral rim (84) of the swivel bearing cup (34) is resilient by means of which the cup is secured axially to the stem flange.

3. A valve assembly as claimed in claim 1 or claim 2, in which an orifice or recess (88) for lubricant is provided in the swivel bearing cup.

4. A valve assembly as claimed in any one of claims 1 to 3, in which the end flange of the stem, includes an overhanging step (104) and the bearing cup has a straight, generally axially directed rim surrounding the flange under the overhanging step.

5. A valve assembly as claimed in claim 4, in which the outer periphery of the step and the rim of the bearing cup contact an inner surface of the diaphragm, the step and rim presenting a smooth complementary surface by contact with each other thereby to present a substantially continuous outer surface.

6. A valve assembly as claimed in any one of claims 1 to 3, in which the end flange of the stem has a convex periphery (120) and the bearing cup has a rim which in the axial direction at least partially wraps around that convex periphery.

7. A valve assembly as claimed in any one of the preceding claims, in which the stem end flange is made of steel, brass or aluminium, and in which the swivel bearing cup is made of a material, for example polyacetal resin, with a dynamic coefficient of friction with the end flange within the range of 0.10 to 0.35.

8. A valve assembly as claimed in any one of the preceding claims, in which the constricted neck of the flexible member of the diaphragm and the stem neck portion each have an axial portion of substantially uniform diameter.

9. A valve assembly as claimed in any one of the preceding claims, in which the stem neck portion has a diameter within the range of about 65 percent to about 85 percent of the interior diameter of the constricted neck of the flexible member of the diaphragm.

10. A valve assembly as claimed in claim 9, in which a radial space is provided between the stem neck portion and the inner diameter of the stop ring such that the radial dimension of the space is up to about 160 percent of the thickness of the diaphragm neck.

11. A valve assembly as claimed in claim 10, in which the percentage (i.e. up to 160 percent) is measured against the thickness of an intermediate portion of the constricted neck of the flexible member of the diaphragm.

12. A valve assembly as claimed in any one of the preceding claims, in which the inner diameter of the sealing ring of the diaphragm is greater than the outer diameter of its closure means.

13. A valve assembly as claimed in any one of the preceding claims, in which the diaphragm is integral and formed of an elastomer having a compression set resistance of not more than about 15 percent and a durometer hardness of 65 to 75.

14. A valve assembly as claimed in any one of the preceding claims with a valve housing (10) which is adapted to have the collar directly threadedly mounted therein and affords a valve chamber (20) with fluid outlet (14) and an inlet fluid flow passage (12) surrounded by a valve seat (24), the stop ring of the assembly being located so that in co-operation with the stop means on the stem it limits the axial movement of the stem in that direction which brings the diaphragm closure means against the valve seat (to close the valve) such that the end closure is compressed against the seat by an amount within the range of 25 percent to 45 percent of its thickness when uncompressed.

**Revendications**

1. Ensemble à valve (28) à utiliser avec un corps de valve (10) comportant un siège (24) de valve entourant un passage (12, 14) d'écoulement de fluide, l'ensemble comprenant une tige (30) de valve montée de façon vissée dans une douille (48) afin de pouvoir y tourner et s'y déplacer axialement, des moyens d'arrêt (74) situés sur la tige afin de limiter son mouvement axial dans le sens de la fermeture de la valve en coopération avec une bague d'arrêt (42) disposée autour d'une partie décolletée (78) de la tige de valve, à distance de cette partie, l'extrémité de la tige (30) située au-delà de la bague d'arrêt (42) éloignée de la douille (48) comportant un rebord extrême (76) situé axialement sur une surface plate d'appui d'une plaque pivotante (34) d'appui afin de pouvoir tourner librement par rapport à elle, et un diaphragme (38) de valve constitué par des moyens de fermeture (90) sur lesquels est disposée la plaque pivotante d'appui et qui est déplacé axialement à la suite d'un mouvement de la tige (30) vers un siège (24) de valve pour fermer le passage de fluide, les moyens de fermeture (90) comportant un élément annulaire flexible les reliant à un anneau (94) d'étanchéité disposé autour de la tige (30), lequel anneau (94) d'étanchéité est conçu pour être fixé à proximité immédiate de la bague d'arrêt (42) et pour isoler ainsi la tige (30) de valve du passage d'écoulement de fluide, caractérisé en ce que la plaque pivotante d'appui se présente sous la forme d'une coupelle (34) qui entoure de façon contiguë le rebord extrême (76), prolongé radialement, de la tige (30), le bord périphérique (84) de la coupelle d'appui étant en butée contre ce rebord, et en ce que l'élément flexible du diaphragme comprend une partie étranglée (92) de col entourant la partie décolletée de la tige de manière que les moyens de fermeture d'extrémité renferment le rebord extrême (76) et la coupelle pivotante d'appui (34), laquelle partie en col (92) peut être contractée axialement à la suite d'un mouvement de la tige (30) pour entraîner le rebord extrême (76) et les moyens de fermeture (90) le renfermant vers la bague d'arrêt (42) (en s'éloignant à force d'un siège de valve), et peut s'expanser axialement à la suite d'un mouvement de la tige pour éloigner les moyens de fermeture de la bague d'arrêt (vers un siège de valve).

2. Ensemble à valve selon la revendication 1, dans lequel le bord périphérique (84) de la coupelle pivotante (34) d'appui est élastique, grâce à quoi la coupelle est fixée axialement au rebord de la tige.

3. Ensemble à valve selon la revendication 1 ou 2, dans lequel un orifice ou un évidement (88) pour lubrifiant est prévu dans la coupelle pivotante d'appui.

4. Ensemble à valve selon l'une quelconque des revendications 1 à 3, dans lequel le rebord extrême de la tige comporte un épaulement en surplomb (104) et la coupelle d'appui comporte un bord droit, dirigé axialement d'une façon générale et entourant le rebord au-dessous de l'épaulement en surplomb.

5. Ensemble à valve selon la revendication 4, dans lequel la périphérie extérieure de l'épaulement et le bord de la coupelle d'appui portent contre une surface intérieure du diaphragme, l'épaulement et le bord présentant une surface complémentaire lisse par contact entre eux afin de présenter une surface extérieure sensiblement continue.

6. Ensemble à valve selon l'une quelconque des revendcations 1 à 3, dans lequel le rebord extrême de la tige présente une périphérie convexe

17 0 072 681 18

(120) et la coupelle d'appui comporte un bord qui, dans la direction axiale, s'enroule au moins partiellement autour de cette périphérie convexe.

7. Ensemble à valve selon l'une quelconque des revendications précédentes, dans lequel le rebord extrême de la tige est réalisé en acier, en laiton ou en aluminium, et dans lequel la coupelle pivotante d'appui est réalisée en une matière, par exemple en une résine du type polyacétal, ayant un coefficient dynamique de frottement avec le rebord extrême compris dans la plage de 0,10 à 0,35.

8. Ensemble à valve selon l'une quelconque des revendications précédentes, dans lequel le col étranglé de l'élément flexible du diaphragme et la partie décolletée de la tige comprennent chacun une partie axiale de diamètre sensiblement uniforme.

9. Ensemble à valve selon l'une quelconque des revendications précédentes, dans lequel la partie décolletée de la tige présente un diamètre compris dans la plage d'environ 65% à environ 85% du diamètre intérieur du col étranglé de l'élément flexible du diaphragme.

10. Ensemble à valve selon la revendication 9, dans lequel un espace radial est prévu entre la partie décolletée de la tige et le diamètre intérieur de la bague d'arrêt de manière que la dimension radiale de l'espace s'élève jusqu'à environ 160% de l'épaisseur du col du diaphragme.

11. Ensemble à valve selon la revendication 10, dans lequel le pourcentage (c'est-à-dire jusqu'à 160%) est mesuré par rapport à l'épaisseur d'une partie intermédiaire du col étranglé de l'élément flexible du diaphragme.

12. Ensemble à valve selon l'une quelconque des revendications précédentes, dans lequel le diamètre intérieur de la bague d'étanchéité du diaphragme est plus grand que le diamètre extérieur de ses moyens de fermeture.

13. Ensemble à valve selon l'une quelconque des revendications précédentes, dans lequel le diaphragme est réalisé d'une seule pièce et formé d'un élastomère ayant une résistance à la déformation rémanente après compression ne dépassant pas environ 15% et une dureté de 65 à 75 au duromètre.

14. Ensemble à valve selon l'une quelconque des revendications précédentes, comportant un corps de valve (10) qui est conçu de manière que la douille y soit montée directement par vissage et qui présente une chambre de valve (20) ayant une sortie de fluide (14) et un passage (12) d'écoulement de fluide d'entrée entouré d'un siège de valve (24), la bague d'arrêt de l'ensemble étant disposée de manière qu'en coopération avec les moyens d'arrêt situés sur la tige, elle limite le mouvement axial de la tige dans le sens amenant les moyens de fermeture à diaphragme contre le siège de valve (pour fermer la valve) afin que la fermeture extrême soit comprimée contre le siège à un degré compris dans la plage de 25% à 45% de son épaisseur à l'état non comprimé.

**Patentansprüche**

1. Ventilanordnung (28) zur Verwendung bei einem Ventilgehäuse (10), das einen einen Durchgang für einen Flüssigkeitsstrom (12, 14) umgebenden Ventilsitz (24) aufweist, wobei die Ventilanordnung (28) einen drehbar und axial bewegbar in einer Fassung (48) eingeschraubten Ventilschaft (30) aufweist, wobei ein mit Abstand um einen Halsbereich (78) des Ventilschafts (30) angeordneter Anschlagring (42) vorgesehen ist und mit einem Anschlag (74) auf dem Ventilschaft (30) zur Begrenzung der axialen Bewegung des Ventilschafts (30) in Schließrichtung des Ventils zusammenwirkt, wobei das jenseits des Anschlagrings (42) von der Fassung (48) entfernt gelegene Ende des Ventilschafts (30) einen Endflansch (76) aufweist, wobei der Endflansch (76) zur Erzielung einer freien Drehbarkeit axial auf einer flachen Lagerfläche einer Drehlagerscheibe (34) angeordnet ist, wobei eine Ventilmembran (38) von einem Schließteil (90) gebildet ist, auf dem die Drehlagerscheibe (34) angeordnet ist und das zur Schließung des Durchgangs durch eine Bewegung des Ventilschafts (30) in Richtung des Ventilsitzes (24) axial bewegbar ist, wobei das Schließteil (90) ein ringförmiges flexibles Teil zur Verbindung mit einem um den Ventilschaft (30) angeordneten Dichtungsring (94) aufweist und wobei der Dichtungsring (94) zur Befestigung neben dem Anschlagring (42) ausgebildet ist, so daß der Ventilschaft (30) vom Durchgang für einen Flüssigkeitsstrom (12, 14) isoliert ist, dadurch gekennzeichnet, daß die Drehlagerscheibe (34) die Form eines den radial erweiterten Endflansch (76) des Ventilschafts (30) angrenzend umgebenden Napfes hat, wobei der Umfangsrand (84) des Napfes am endflansch (76) anliegt, daß das flexible Teil der Ventilmembran (38) einen verjüngten Halsbereich (92) aufweist, der den Halsbereich (94) des Ventilschafts (30) derart umgibt, daß das Schließteil (90) den Endflansch (76) und die als Napf ausgebildete Drehlagerscheibe (34) umschließt und daß der verjüngte Halsbereich (92) zum einen bei Bewegung des Ventilschafts (30) axial zusammenziehbar ist und so den Endflansch (76) und das umhüllende Schließteil (90) in Richtung des Anschlagrings (42) bewegt (sicher weg vom Ventilsitz (24)), zum anderen bei Bewegung des Ventilschafts (30) axial dehnbar ist und das Schließteil (30) weg vom Anschlagring (42) bewegt (in Richtung des Ventilsitzes (24)).

2. Ventilanordnung nach Anspruch 1, dadurch gekennzeichnet, daß der Umfangsrand (84) der als Napf ausgeführten Drehlagerscheibe (34) elastisch ist, so daß der Napf axial am Endflansch (76) des Ventilschafts (30) anliegt.

3. Ventilanordnung nach Anspruch 1 oder 2, dadurch gekennzeichnet, daß in der als Napf ausgeführten Drehlagerscheibe (34) eine Öffnung oder Ausnehmung (88) für ein Schmiermittel vorgesehen ist.

4. Ventilanordnung nach einem der Ansprüche 1 bis 3, dadurch gekennzeichnet, daß der Endflansch (76) des Ventilschafts (30) einen stufenartigen Vorsprung (104) aufweist und daß die als Napf ausgeführte Drehlagerscheibe (34) einen geraden, im wesentlichen axial gerichteten Rand aufweist, der den Endflansch (76) unter dem stufenartigen Vorsprung (104) umgibt.

5. Ventilanordnung nach Anspruch 4, dadurch gekennzeichnet, daß der Aussenumfang des stufenartigen Vorsprungs (104) und der Rand der als Napf ausgeführten Drehlagerscheibe (34) eine Innenfläche der Ventilmembran (38) berühren und daß der Vorsprung (104) und der Rand durch Anlage aneinander eine glatte, angepaßte Oberfläche bilden, so daß eine in wesentlichen kontinuierliche Außenfläche gebildet ist.

6. Ventilanordnung nach einem der Ansprüche 1 bis 5, dadurch gekennzeichnet, daß der Endflansch (76) des Ventilschafts (30) eine konvexe Umfangsfläche (120) aufweist und daß die als Napf ausgeführte Drehlagerscheibe (34) einen die Umfangsfläche (120) in axialer Richtung zumindest zum Teil umschließenden Umfangsrand (84) aufweist.

7. Ventilanordnung nach einem der Ansprüche 1 bis 6, dadurch gekennzeichnet, daß der Endflansch (76) des Ventilschafts (30) aus Stahl, Messing oder Aluminium besteht und daß die als Napf ausgeführte Drehlagerscheibe (34) aus einem Material besteht, das gegenüber dem Endflansch (76) einen dynamischen Reibungskoeffizienten zwischen 0,1 und 0,05 aufweist, beispielsweise Polyacetalharz od. dgl.

8. Ventilanordnung nach einem der Ansprüche 1 bis 7, dadurch gekennzeichnet, daß der verjüngte Halsbereich (92) des flexiblen Teils ver Ventilmembran (38) und der Halsbereich (94) des Ventilschafts (30) einen axialen Bereich von im wesentlichen übereinstimmenden Durchmesser aufweisen.

9. Ventilanordnung nach einem der Ansprüche 1 bis 8, dadurch gekennzeichnet, daß der Halsbereich (94) des Ventilschafts (30) einen Durchmesser hat, der im Bereich zwischen 65% und 85% des inneren Durchmessers des verjüngten Halsbereichs (92) des flexiblen Teils der Ventilmembran (38) liegt.

10. Ventilanordnung nach Anspruch 9, dadurch gekennzeichnet, daß zwischen dem Halsbereich (94) des Ventilschafts (30) und dem Innendurchmesser des Anschlagrings (42) ein radialer Freiraum vorgesehen ist, wobei die radiale Ausdehnung des Freiraums etwa 160% der Dicke des Halsbereichs (92) der Ventilmembran (38) beträgt.

11. Ventilanordnung nach Anspruch 10, dadurch gekennzeichnet, daß das prozentuale Verhältnis (d. h. bis zu 160%) auf die Dicke eines mittleren Bereichs des verjüngten Halsbereichs (92) des flexiblen Teils der Ventilmembran (38) bezogen ist.

12. Ventilanordnung nach einem der Ansprüche 1 bis 11, dadurch gekennzeichnet, daß der Innendurchmesser des Dichtungsrings (94) der Ventilmembran (38) größer ist als der Außendurchmesser des Schließteils (90).

13. Ventilanordnung nach einem der Ansprüche 1 bis 12, dadurch gekennzeichnet, daß die Ventilmembran (38) als integrales Teil aus einem elastomeren Material mit einem Kompressionswiderstand von nicht mehr als 15% und einer mit einem Härteprüfgerät gemessenen Härte von 65 bis 75 (nach ASTM-Norm) ausgeführt ist.

14. Ventilanordnung nach einem der Ansprüche 1 bis 13, dadurch gekennzeichnet, daß das Ventilgehäuse (10) zum direkten Einschrauben der Fassung (48) eingerichtet ist und eine Ventilkammer (20) mit einem Flüssigkeitsauslaß (14) und einem Flüssigkeitseinlaß (12), umgeben vom Ventilsitz (24) bildet, daß der Anschlagring (42) der Ventilanordnung (28) so angeordnet ist, daß er in Verbindung mit dem Anschlag (74) auf dem Ventilschaft (30) die axiale Bewegung des Ventilschafts (30) in der Richtung begrenzt, die das die Ventilmembran (38) bildende Schließteil (90) am Ventilsitz (24) zur Anlage bringt (zum Schließen des Ventils), so daß der Endabschluß so gegen den Ventilsitz (24) gedrückt wird, daß seine Dicke zwischen 25% und 45% der Dicke in nicht zusammengedrücktem Zustand entspricht.

0 072 681

FIG. 1

# FIG. 2

# FIG. 3

# FIG. 4